# EUROPEAN PATENT SPECIFICATION

(11) **EP 2 892 400 B1**
(45) Date of publication and mention of the grant of the patent: **05.04.2017**
(21) Application number: 13759181.4
(22) Date of filing: 06.09.2013
(51) Int. Cl.: A47J 31/36

(54) **CAPSULE STORAGE**
KAPSELLAGERUNG
STOCKAGE DE CAPSULE

(30) Priority: 07.09.2012 EP 12183553
(43) Date of publication of application: 15.07.2015
(73) Proprietor: Nestec S.A., 1800 Vevey (CH)
(72) Inventor: AGON, Fabien Ludovic, 1807 Blonay (CH); MAGATTI, Marco, 1010 Lausanne (CH); PHAN, Minh Quan, 1030 Bussigny (CH)
(74) Representative: Sacroug, Olivier
(86) International application number: PCT/EP2013/068416
(87) International publication number: WO 2014/037474

(56) References cited:
- EP-A1- 2 106 727
- WO-A1-2008/113459
- WO-A1-2011/067157
- WO-A2-2009/133570
- DE-U1- 20 121 494

## Description

### Field of the invention

The invention pertains to the field of the beverage preparation systems, in particular using capsules containing an ingredient for preparing a beverage. More particularly, the invention relates to accessories for storing capsules, and machines for preparing a beverage adapted to cooperate with such accessories.

For the purpose of the present description, a "beverage" is meant to include any human-consumable liquid substance, such as coffee, tea, hot or cold chocolate, milk, soup, baby food or the like. A "capsule" is meant to include any pre-portioned beverage ingredient or combination of ingredients (hereafter called "ingredient") within an enclosing packaging of any suitable material such as plastic, aluminium, a recyclable and/or bio-degradable material and combinations thereof, including a soft pod or a rigid cartridge containing the ingredient.

### Technical background

Certain beverage preparation machines use capsules containing an ingredient to be extracted or to be dissolved and/or an ingredient that is stored and dosed automatically in the machine or else is added at the time of preparation of the drink. Some beverage machines possess liquid filling means that include a pump for liquid, usually water, which pumps the liquid from a source of water that is cold or indeed heated through heating means, e.g. a thermoblock or the like.

Especially in the field of coffee preparation, machines have been widely developed in which a capsule containing a beverage ingredient is inserted in a brewing device. The brewing device is tightly closed about the capsule, water is injected at the first face of the capsule, the beverage is produced in the closed volume of the capsule and a brewed beverage can be drained from a second face of the capsule and collected into a receptacle such as a cup or glass.

Capsules storages are commonly used to store in a common place, outside the beverage machine, a stock of capsules. For instance, a user can conveniently put the capsules that he had just bought, in this accessory, generally placed at the immediate vicinity of his beverage preparation machine. For preparing his beverage, the user then might pick up an appropriate capsule in the capsules storage, and put it directly in the machine. The documents DE 201 21 494 U and EP 2 106 727 A1 disclose capsule storage devices. However, the existing capsule storages do not provide any further possibilities for providing information on the stored capsules, and interactions with the user are very limited. The existing capsule storages do not provide any advanced functionalities for helping the user re-ordering capsules. That's why there is still a need to increase convenience of such device, in particular by making the re-ordering process more convenient and user-friendly.

### Summary of the invention

An object of the invention is to provide more convenience, and less user's intervention in the way of handling storage of capsules and re-ordering capsules. Another object is to provide additional information or feedback on stored capsules.

One or more of these objects are met by devices and methods according to the independent claims. The dependent claims further provide solutions to these objects and/or additional benefits.

More particularly, according to a first aspect, the invention relates to a device comprising a container for storing capsules containing an ingredient for preparing a beverage using a beverage preparation machine. The device further comprises:
- a first interface for communicating with a module;
- a user-interface having a first element switchable into at least a first state;
- a controler configured to send information to the module, through the first interface, when the first element is switched into the first state.
The controler may be configured to wait before sending information to the module that the module is ready to receive the information through the first interface and that the first element is switched into the first state.

For instance, the first element may be a toggle button: in the first state, the button is switched on (with a light on); in a second state the button is switch off (with a light off). The user may switch between the first state and the second state by pressing the button. Alternatively, any user-interface element switchable to the first state may be used, such as a 2-states switch, a lever, a display means with an adequate user interface, etc. The information sent by the controller through the first interface, comprises a request to perform a specific action, for example to the module to activate a specific module and/or software such as a capsules order processing module. More specifically, the request comprises information related to an order of capsules, for example a request to activate a specific module and/or software such as a capsules order processing module and/or a request to prepare and/or to send a new order with. For example, a user may switch the first element into the first state (for example by pushing a toggle button) when he thinks someone needs to re-order new capsules for filling the capsule storage. When said user or another one couples the module to the first interface, for example by coupling wirelessly a Smartphone provided with such a module, with a Bluetooth or WiFi connection, the controler send information to the module, through the first interface, if the first element is still into the first state. Then, the module may trigger the execution of an ordering processing module or display a reminder that the user may place a new order of capsules.

The device allows in particular providing simple and intuitive integrated solution for managing actions related to capsules. This is particularly advantageous the action triggering the process of re-ordering capsule is located in the device used by the user to store capsules. The invention allows also a user using a device he already owns, in cooperation to the invention, to get access to advance functionalities/information while not increasing drastically the cost of the storage device.

In an embodiment, the capsule storage comprises a sensing arrangement adapted to detect the presence of a capsule in a detection area and to obtain information related to said capsule; the information sent by the controller through the first interface, comprising said capsule related information. In particular, the sensing arrangement may be adapted to obtain information related to the capsule by receiving or reading information from the capsule, for example by reading a magnetic code or memory of an RFID tag, and/or by measuring at least one of the following characteristic of the capsule: spectral property, colour, electrical property, resistivity, capacitance, electromagnetic property, magnetic induced field, mechanical property, geometry, weight, identifying information, code bar, emitted or reflected signal. The device allows then the module to display information on said capsule, for example the type of capsule, information on ingredients included in the capsule, recipes related to said capsule, a description, volume of beverage that can be prepared with said capsule, the intensity of the beverage that can be prepared with said capsule, etc. The device may further comprise, in the detection area, a positioner arranged to hold a capsule. The sensing arrangement may be further adapted to identify a type for the capsule, and send, through the first interface, data related to the type for the capsule, the information sent by the controller through the first interface, comprising the type of the capsule in the detection area. This is particularly advantageous in beverage preparation systems having different types of capsules, as it allows, for example, the user identifying the type of a given capsule stored in the capsule storage, and optionally to access further information related to said capsule such a description or instructions to prepare a beverage. Moreover, the module receiving said information may be configured to automatically prepare and/or send a re-order using said type information. More particularly, if a user positioned a capsule of a first type in the detection area and switch the first element into the first state, the module receive also the type of the capsule, and its ordering processing module may prepare an order comprising said first type of capsules.

The sensing arrangement is further adapted to count the number of capsules in the detection area; the information sent by the controller to the module through the first interface, comprising the number of capsules in the detection area. For instance, the sensing arrangement may be adapted to count the number of capsules in the detection area by receiving or reading information from the capsules present in the detection area, for example by receiving signals from RFID tags embedded in each capsule and identifying each one separately, and/or by measuring at least one of the following characteristic of the capsules positioned in the detection area: geometry or optical pattern recognition, weight, identifying information for identifying each capsules separately. The user can have a feedback of the content of his container in an efficient way and know at any time what the number of capsules in his stock. This is particularly as it allows, for example, the user managing efficiently his stock of capsules, and optionally streamlined the re-ordering process. The module receiving said count information may be configured to automatically prepare and/or send a re-order using said count information. More particularly, it allows the module to prepare automatically an order, when the user has switched the first element into the first state and when the stock of capsules has reached a given threshold. The ordering processing module may prepare and/or place automatically a saved order when the number of capsules is below a given threshold.

In an embodiment, the module is integrated in the capsule storage.

In another embodiment, the module may be a Smartphone, a tablet, or a computer. The device may further comprise a docking station provided with a support for holding a module. Said docking station may be provided with connectors for supplying energy to the module held by the support. The device may further comprise a second connector adapted to be coupled to a third external connector of a beverage preparation machine, the second connector being arranged to receive energy supplied by the third external connector and to distribute through a power circuit said energy to components of the device. Adding such functionalities to a capsule storage in a common device avoid the duplication devices having the same purpose in the vicinity of the beverage preparation system, reducing cost and providing convenience to the user.

The capsule storage may further comprise a second connector adapted to be coupled into a third external connector of a beverage preparation machine, the second connector being arranged to receive energy supplied by the third external connector, and to distribute through a power circuit said energy to components of the device. The capsule storage may further comprise a communication interface adapted for exchanging data with a beverage preparation machine, the information sent by the controller through the first interface, comprising data received from beverage preparation machine. The information sent by the controller through the first interface, may also comprise data received from beverage preparation machine related to capsules consumption of said beverage preparation machine. It allows the user to expand if required or desired the capacities of its beverage preparation machine by using the extra capabilities of the capsule storage. The cost of the beverage preparation machine can consequently be reduced. Reciprocally using information providing by the beverage preparation machine allows keeping the capsule storage more simple. More generally, it makes the systems comprising the beverage machine and the capsule storage more flexible, adaptable and customizable. In particular, it allows the order processing module of the module to use information related to the preparations of beverage send by the beverage preparation to prepare order. For example, the order processing module may follow the stock of capsules using the number and/or type of capsules used by the beverage preparation machine to actually prepare beverage, and prepare order accordingly.

The first interface and/or the second interface may be in particular a wireless interface, adapted for communicating with the module without direct mechanical connection, such as a Bluetooth and/or WIFI and/or Near Field Communication interface(s). The communication interface may be in particular a wireless interface, adapted for communicating with feedback means without direct mechanical connection, such as a Bluetooth and/or WIFI and/or Near Field Communication interface(s).

According to a second aspect, the invention relates to a beverage preparation system comprising:
- a communication interface adapted for exchanging data with a device according to the first aspect; and/or,
- a connector adapted to be coupled into an external connector of a device according to the first aspect for supplying energy to said device.

According to a third aspect, the invention relates to a module comprising:
- a second interface for communicating with a capsule container according to the first aspect;
- a controler configured to receive information from the capsule container through the second interface;
- a processing module configured upon reception of information from the capsule container to process said information.

The processing module is configured upon reception of information from the capsule container to perform a specific action comprising launching a capsules ordering processing module for displaying received information and/or reminding a user to perform an order of capsules, and/or preparing an order of capsules based upon received information, and/or automatically send an order of capsules.

According to a fourth aspect, the invention relates to a method for managing order of capsules. In a first optional step, an module, such as a Smartphone, is coupled to the first interface of a device according to the first aspect, for example by plugging said device to a docking station or by coupling wirelessly said device with the communication interface. Optionally, the launch or the activation or the display of the user-interface of a dedicated module or software according to the third aspect may be triggered automatically or manually, during the first step. In a second step, the first element is switched into the first state. Optionnally, in a second step, upon insertion and/or detection of the presence of a capsule in the detection area of the device according to the first aspect, the sensing arrangement of the device according to the first aspect is configured to detect the type of said capsule. For instance, during the second step, the sensing arrangement is used to watch over the detection area, so as to detect a presence of a capsule. The sensing arrangement may be operated continuously. Alternatively, the sensing arrangement may be used during discrete time periods: for example sensing arrangement may be activated every second during the time needed to detect an eventual presence of a capsule onto the detection area. The second step is carried out repeatedly, until a capsule is actually detected. During the second step, the sensing arrangement is used to measure a set of characteristics of the detected capsule. A profile **Pr**_{c} of the detected capsule can then be drawn up from the measured characteristics. The profile **Pr**_{c} comprises at least one minimal set of information necessary to identify the belonging of the detected capsule to a reference group. A corresponding reference profile **Pr_{REF}** is defined for each reference group, defining a set of reference profiles **Pr_{REF}[** ]. The reference groups are used to divide capsules into different sets. Each reference profile **Pr_{REF}** comprises at least a minimal set of characteristics that a capsule should reproduce to be identified as belonging to at least one corresponding reference group. Each reference profile **Pr_{REF}** may comprise, for at least each characteristic of the minimal set, a target value, a range, and/or a list of acceptable target values that a capsule should reproduce to be identified as belonging to the corresponding reference group. The sensing arrangement compares the profile **Pr_{c}** of the detected capsule with the reference profiles **Pr_{REF}[ ]**. The reference profiles **Pr_{REF}[ ]** may be stored permanently or temporarily within the memories of the sensing arrangement. The reference profiles **Pr_{REF}[ ]** may be entered on the machine at a setup step or being downloaded on demand. The reference profiles **Pr_{REF}[ ]** may be obtained from a remote location or from a removable memory device, like an USB key or from a portable digital device, connected temporarily to the machine. The reference profiles **Pr_{REF}[ ]** may be updated or parameterized, for example, to take into consideration particular characteristics of the machine, such as calibration data or actual characterization performances of the recognition unit. In particular, it is determined whether the capsule's profile **Pr_{c}** matches one of the reference profiles **Pr_{REF}[ ]**. If the profile **Pr_{c}** of the capsule does not match any reference profiles **Pr_{REF}[ ]**, information **I1_UNIDENTIFIED** is generated by the sensing arrangement. By contrast, if the profile **Pr_{c}** of the capsule matches one of the reference profiles the reference profiles **Pr_{REF}[ ]**, information **I1_IDENTIFIED** is generated by the controller 10. The information **I1_IDENTIFIED** includes at least information to identify the corresponding reference profile, for example a unique identifier corresponding to a given reference profile **Pr_{REF}.** Several criteria may be applied to determine if a profile matches one of the reference profiles. For example, a given capsule may belong to one of four groups: aluminium capsules, capsules adapted to prepare a short espresso (ristretto, 25ml), capsules adapted to prepare an espresso (40ml), capsules adapted to prepare a long espresso (lungo, 110ml). The reference profile **Pr_{REF}** corresponding to the aluminium capsules contains for example a resistivity range centered around 100 ohms more or less 10%. The reference profile **Pr_{REF}** corresponding to the short espresso group may contain a color range covering green tones (between 520 and 570 nm, for example). In this last example, the profile of a capsule having a light green outside membrane and a measured resistivity of 97 ohms would match the reference profile of the short espresso group and those of the aluminium capsules group. Consequently, the capsule would be considered as belonging to the short espresso group and to the aluminium capsules group. A capsule having a red outside membrane would not be considered as a member of the short espresso group. In an embodiment, a reference profile may also comprise a plurality of minimal sets of information necessary to identify the belonging of the detected capsule to one reference group. In particular, a reference profile may comprise, for at least one characteristic of the minimal set, a plurality of target value, and/or range, and/or list of acceptable target values, that a capsule should reproduce to be identified as belonging to the corresponding reference group. For example, the reference profile **Pr_{REF}** corresponding to the short espresso group may contain a plurality of color ranges covering green tones (between 520 nm and 570 nm, for example) and red tones (between 630 nm and 740 nm, for example). In this last example, the profile of a capsule having a light green outside membrane would match the reference profile of the short espresso group. The profile of a capsule having a red outside membrane would also match the reference profile of the short espresso group. In another example, the reference profile **Pr_{REF}** corresponding to the aluminium capsule may contain a plurality of couples of target resistance and capacitance values. Other approach may be applied to determine if a profile matches one of the reference profiles, for example using Bayesian networks, self-learning neural networks, and, generally speaking, probabilistic methods. In an alternative embodiment, the dedicated software running on the module, such as an application running on a Smartphone, may be used to perform the necessary steps, or part of said steps, for determining the type of the detected capsule, based upon information provided by the sensing arrangement and transmitted by the controller on the communication interface. In a third step, the controler of the capsule storage send information to the module, through the first interface, when the first element is switched into the first state. Optionally, the module may display said information or used said information to display information related to the detected capsule by processing information received on the communication interface and/or retrieving locally or remotely data related to the received information.

### Brief description of the drawings

The invention will now be described with reference to the schematic drawings, wherein:
- Figure 1 is a cross section of a capsule adapted to be used by the beverage machine to prepare a beverage;
- Figure 2 is a perspective representation of a capsule storage according to an embodiment and a module according to an embodiment;
- Figure 3 shows a screenshot of displayed feedback information related to a detected capsule positioned in the detection area of the capsule storage;
- Figure 4 is a perspective representation of a capsule storage with a container filled with capsule;
- Figure 5 is a synoptic of a method for displaying information related to a capsule according to an embodiment;
- Figure 6a, 6b are perspective representations of a systems comprising a beverage preparation machine according to an embodiment and a capsule storage according to an embodiment.

### Detailed description of the invention

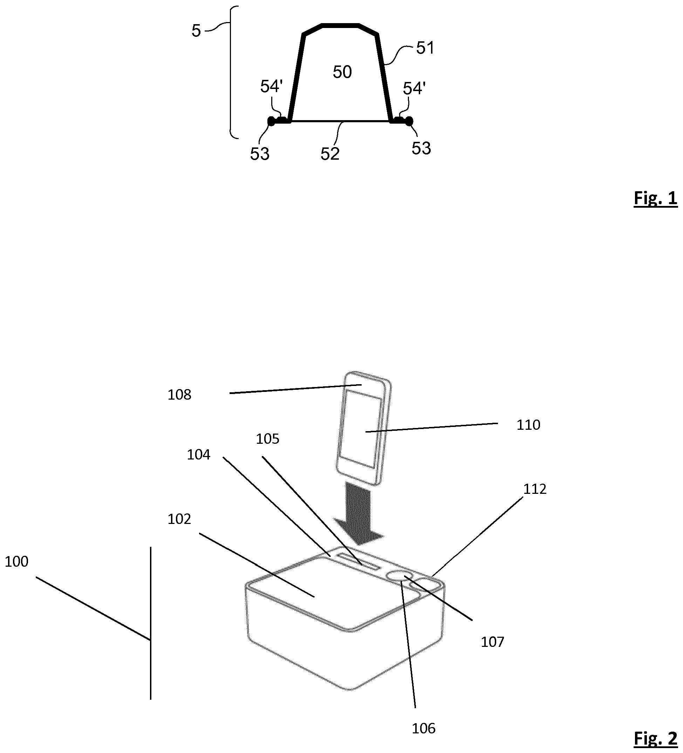

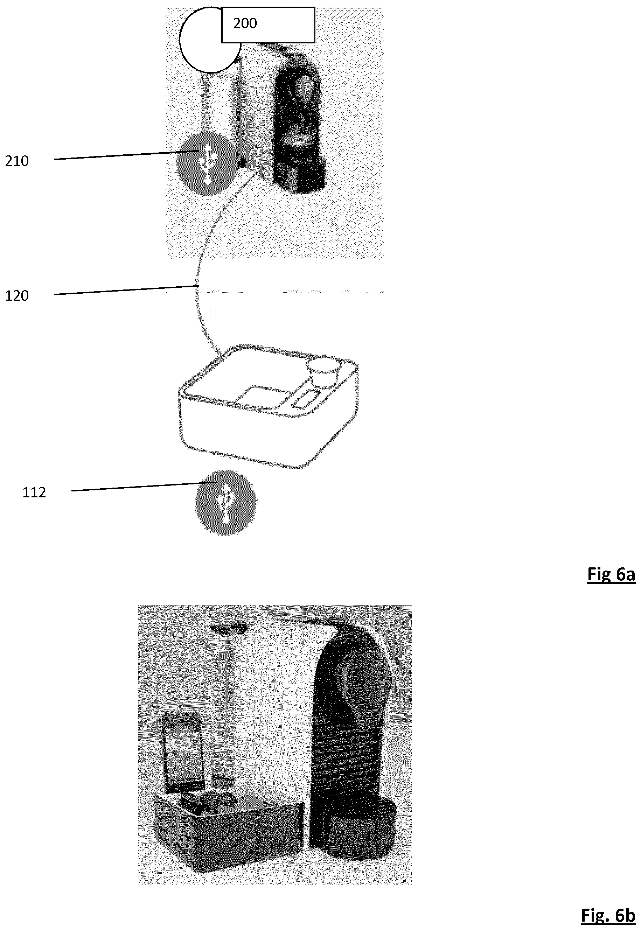

A beverage machine 200 according to an embodiment is illustrated schematically on figure 6a and 6b. The beverage machine comprises typically a brewing unit which is coupled with an electrical motor driving transmission means for moving the brewing unit between an opened and a closed position. The brewing unit allows the preparation of a beverage from a capsule 5, as represented on Figure 1, containing at least one ingredient, e.g. ground coffee or tea or chocolate. As shown in Figure 1, the capsule has a generally cup-shaped body **51** and a lid such as a covering membrane **52.** Membrane is assembled to cup along a peripheral rim **54** of cup. The rim may comprise a seal **54',** e.g. made of elastomeric or plastic material, for improving the fluid-tight engagement of the capsule in the brewing unit. Furthermore, the capsule in particular the rim and/or the membrane may bear a ring or toroid **53,** e.g. for assisting manufacturing and/or handling of the capsule. Such capsule forms a packaging for containing an ingredient **50,** e.g. ground coffee, of a beverage to be prepared with the beverage preparation machine. In an embodiment, the capsule forms a gastight packaging, e.g. made of aluminium or an aluminium-alloy. Alternatively, the capsule may be more or less pervious, e.g. perforated and/or made of organic, in particular plastic material, e.g. biodegradable material. The capsule's cup and/or the capsule's lid may be made of a monolithic material, e.g. a metallic material or a conductive ceramic and/or conducive organic material, or may be made of a structure covered or containing a conductive material, e.g. a conductive coating or track, e.g. an aluminium, iron and/or copper coating or track.

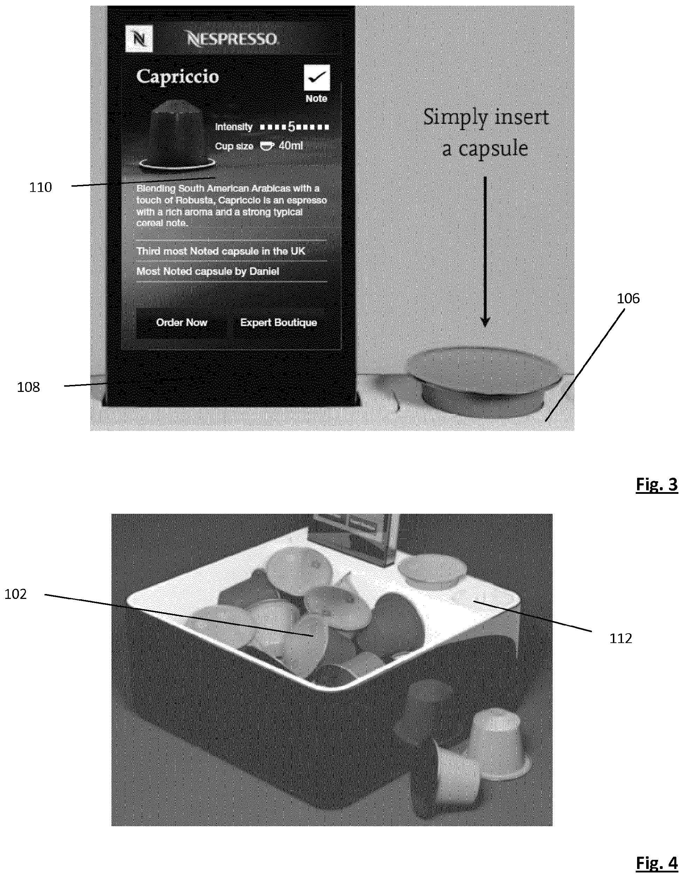

Referring to Figure 2, there is shown therein a capsule storage 100 comprising a container 102. The container 102 is adapted to hold a plurality of capsules 5, as represented on figure 4. For instance, the container 102 may be a cavity formed in a housing of the capsule storage 100. The container can be filled in with capsules 5 by the user for easily pick-up one of the capsules 5 held by the container when he want to prepare a beverage. The capsule storage 100 comprises a sensing arrangement 106 adapted to detect the presence of a capsule in a detection area and to obtain information related to said capsule.

In the embodiment illustrated on figures 2, 3, 4, 5, the sensing arrangement 106 comprises, in the detection area, a capsule positioner having a seat adapted to store at least one first capsule. The capsule seat is formed in a housing of the capsule storage 100. Alternatively, the capsule seat may be a separate part mounted on the housing of the capsule storage (not represented on the drawings). The capsule seat may comprise guides formed into the housing and surrounding the capsule seat, in particular to ease the positioning of a capsule by a user and/or to improve the holding of a capsule in the seat. The sensing arrangement 106 may also be further adapted to determine a type for a detected capsule positioned onto the capsule positioner or in the detection area. The detection of a capsule and the recognition of its type can be obtain by receiving or reading information from a capsule, for example identification data emitted by a radiofrequency component embedded in the detected capsule. It can also be realized by measuring at least one characteristic of the capsule, for example: spectral property, electrical property, electromagnetic property, emitted or reflected signal, color, resistivity, capacitance, variation of the magnetic field, magnetic induced field, geometry, code bar, identifier, signal, electromagnetic echo, weight, and mechanical parameter. Some characteristics may be obtained passively by a sensor without interacting with the detected capsule. For instance, it is possible to recognize an outside color of a part of the capsule. Other characteristics may be obtained actively by the sensor in interacting with the detected capsule. For example the sensor may apply an alternative current to the detected capsule and then may measure parameters of the inductive field generated this way and/or resistivity and/or capacitance of the detected capsule.

In the perspective views of Figures 2, 3, 4, 5, the detection means and recognition means are not visible, hidden by the housings of the capsule storage: The capsule detector and the recognition means may be positioned in the vicinity of the detection area, for instance near the capsule positioner, and more particularly, near, around and/or in the capsule seat.

The capsule storage comprises a communication interface 104 for communicating with a module. In the embodiment illustrated on Figures 2, 3, 4, 5, the capsule storage comprises a docking station 105 provided with a support for holding an external module 108. In particular, the external module 108 may be a Smartphone provided with a display 110, as illustrated on Figure 2 and 3. The docking station 105 can be provided with connectors for supplying energy to an external device held by the support, for example for charging the battery of a Smartphone when the latter is coupled to the docking station. In another embodiment (not illustrated), the communication interface 104 is a wireless interface, adapted for communicating with feedback means without direct mechanical connection, such as a Bluetooth and/or WIFI and/or Near Field Communication interface(s).

The capsule storage comprises a user-interface having a first element 112 switchable into at least a first state. For instance, the first element may be a toggle button: in the first state, the button is switched on (with a light on); in a second state the button is switch off (with a light off). The user may switch between the first state and the second state by pressing the button. Alternatively, any user-interface element switchable to the first state may be used, such as a 2-states switch, a lever, a display means with an adequate user interface, etc. The controler is configured to send information to the module, through the communication interface 104, when the first element is switched into the first state. The controler may be configured to wait before sending information to the module that the module is ready to receive the information through the first interface and that the first element is switched into the first state.

The information sent by the controller through the first interface, may comprise a request to perform a specific action, for example to the module to activate a specific module and/or software such as a capsules order processing module, as illustrated on figure 3. More specifically, the request may comprise information related to an order of capsules, for example a request to activate a specific module and/or software such as a capsules order processing module and/or a request to prepare and/or to send a new order with. For example, a user may switch the first element into the first state (for example by pushing a toggle button) when he thinks someone needs to re-order new capsules for filling the capsule storage. When said user or another one couples the module to the first interface, for example by coupling wirelessly a Smartphone provided with such a module, with a Bluetooth or WiFi connection, the controler send information to the module, through the first interface, if the first element is still into the first state. Then, the module may trigger the execution of an ordering processing module or display a reminder that the user may place a new order of capsules.

The information sent to the module by the controller may also comprise information related to the detected capsule. More particularly, the information may comprise the type for the detected capsule positioned onto the capsule positioner or in the detection area. The type for the detected capsule is determined using information provided by the sensing arrangement, or information allowing the feedback element to determine a type for the detected capsule, such as its spectral property, electrical property, electromagnetic property, emitted or reflected signal, color, resistivity, capacitance, variation of the magnetic field, magnetic induced field, geometry, code bar, identifier, signal, electromagnetic echo, weight, and mechanical parameter. As illustrated on the figure 3, the Smartphone having received this information through the communication interface 104 can present it on its display. More particularly, the Smartphone may display on its screen for the detected capsule in the detection area: the type of the Capsule (e.g. "Capriccio", the intensity of the beverage obtained using said capsule, the volume of beverage that is recommended to prepare with said capsule, a description of the ingredients contained in said capsule, information retrieved remotely related to said capsule (for example popularity of the capsule amongst customers, member of a club or social network on Internet), user-specific information retrieved in the Smartphone or remotely related to said capsule (for example a note / memo, written by the owner of the Smartphone for said given type of the detected capsule), etc. The information or part of the information displayed on the Smartphone may be retrieved remotely, for instance on Internet, on a local network or from a remote storage, using information related to the capsule received from the communication interface. The information or part of the information displayed on the Smartphone may be retrieved locally using information related to the capsule received from the communication interface. The module receiving information related to the detected capsule may be configured to automatically prepare and/or send an order using said type information: for example if the capsule is recognized as being of a first type, the module may prepare an order comprising such type of capsules, and optionally send this order automatically or create a reminder in the module for the user to place an order comprising said type of capsule. More particularly, if a user positioned a capsule of a first type in the detection area and switch the first element into the first state, the module receive also the type of the capsule, and its ordering processing module may prepare an order comprising said first type of capsules.

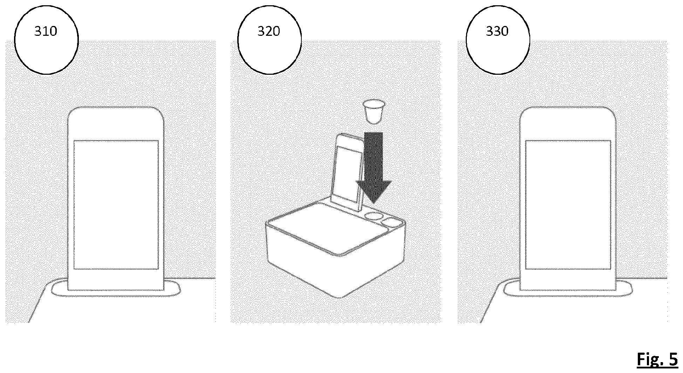

Referring now to Figure 5, there is shown therein the steps of a method for managing orders of capsules according to an embodiment. In a first optional step 310, a module, such as a Smartphone, is coupled to the communication interface 104, for example by plugging said device to a docking station or by coupling wirelessly said device with the communication interface. Optionally, the launch or the activation or the display of the user-interface of a dedicated software may be triggered automatically or manually, during the first step.

In a second step 320, the user switches the first element into the first state, for example by toggling a button upon insertion and/or detection of the presence of a capsule in the detection area, the sensing arrangement is configured to detect the type of said capsule. Optionally, during the second step 320, the sensing arrangement is used to watch over the detection area, so as to detect a presence of a capsule. The sensing arrangement may be operated continuously. Alternatively, the sensing arrangement may be used during discrete time periods: for example sensing arrangement may be activated every second during the time needed to detect an eventual presence of a capsule onto the detection area. The second step is carried out repeatedly, until a capsule is actually detected. During the second step **120,** the sensing arrangement is used to measure a set of characteristics of the detected capsule. A profile **Pr_{c}** of the detected capsule can then be drawn up from the measured characteristics. The profile **Pr_{c}** comprises at least one minimal set of information necessary to identify the belonging of the detected capsule to a reference group. A corresponding reference profile **Pr_{REF}** is defined for each reference group, defining a set of reference profiles **Pr_{REF}[ ]**. The reference groups are used to divide capsules into different sets. Each reference profile **Pr_{REF}** comprises at least a minimal set of characteristics that a capsule should reproduce to be identified as belonging to at least one corresponding reference group. Each reference profile **Pr_{REF}** may comprise, for at least each characteristic of the minimal set, a target value, a range, and/or a list of acceptable target values that a capsule should reproduce to be identified as belonging to the corresponding reference group. During the second step, the sensing arrangement compares the profile **Pr_{c}** of the detected capsule with the reference profiles **Pr_{REF}[ ]**. The reference profiles **Pr_{REF}[ ]** may be stored permanently or temporarily within the memories of the sensing arrangement. The reference profiles **Pr_{REF}[ ]** may be entered on the machine at a setup step or being downloaded on demand. The reference profiles **Pr_{REF}[ ]** may be obtained from a remote location or from a removable memory device, like an USB key or from a portable digital device, connected temporarily to the machine. The reference profiles **Pr_{REF}[ ]** may be updated or parameterized, for example, to take into consideration particular characteristics of the machine, such as calibration data or actual characterization performances of the recognition unit. In particular, it is determined whether the capsule's profile **Pr_{c}** matches one of the reference profiles **Pr_{REF}[ ]**. If the profile **Pr_{c}** of the capsule does not match any reference profiles **Pr_{REF}[ ]**, information **I1_UNIDENTIFIED** is generated by the sensing arrangement. By contrast, if the profile **Pr_{c}** of the capsule matches one of the reference profiles the reference profiles **Pr_{REF}[ ]**, information **I1_IDENTIFIED** is generated by the controller 10. The information **I1_IDENTIFIED** includes at least information to identify the corresponding reference profile, for example a unique identifier corresponding to a given reference profile **Pr_{REF}.** Several criteria may be applied to determine if a profile matches one of the reference profiles. For example, a given capsule may belong to one of four groups: aluminium capsules, capsules adapted to prepare a short espresso (ristretto, 25ml), capsules adapted to prepare an espresso (40ml), capsules adapted to prepare a long espresso (lungo, 110ml). The reference profile **Pr_{REF}** corresponding to the aluminium capsules contains for example a resistivity range centered around 100 ohms more or less 10%. The reference profile **Pr_{REF}** corresponding to the short espresso group may contain a color range covering green tones (between 520 and 570 nm, for example). In this last example, the profile of a capsule having a light green outside membrane and a measured resistivity of 97 ohms would match the reference profile of the short espresso group and those of the aluminium capsules group. Consequently, the capsule would be considered as belonging to the short espresso group and to the aluminium capsules group. A capsule having a red outside membrane would not be considered as a member of the short espresso group. In an embodiment, a reference profile may also comprise a plurality of minimal sets of information necessary to identify the belonging of the detected capsule to one reference group. In particular, a reference profile may comprise, for at least one characteristic of the minimal set, a plurality of target value, and/or range, and/or list of acceptable target values, that a capsule should reproduce to be identified as belonging to the corresponding reference group. For example, the reference profile **Pr_{REF}** corresponding to the short espresso group may contain a plurality of color ranges covering green tones (between 520 nm and 570 nm, for example) and red tones (between 630 nm and 740 nm, for example). In this last example, the profile of a capsule having a light green outside membrane would match the reference profile of the short espresso group. The profile of a capsule having a red outside membrane would also match the reference profile of the short espresso group. In another example, the reference profile **Pr_{REF}** corresponding to the aluminium capsule may contain a plurality of couples of target resistance and capacitance values. A profile of a capsule will match a reference profile of the aluminium capsule if:
- the capsule has a resistance of 100 ohms +/- 5 % and a capacitance of 100nF +/- 2%; or,
- the capsule has a resistance of 1000 ohms +/- 5 % and a capacitance of 50nF +/- 2%.

In this last example, the profile of a capsule having a resistance of 101 ohms and a capacitance of 50 nF will not be considered to belong to the aluminium capsules group. Other approach may be applied to determine if a profile matches one of the reference profiles, for example using Bayesian networks, self-learning neural networks, and, generally speaking, probabilistic methods. In an alternative embodiment, the dedicated software running on the external feedback means, such as an application running on a Smartphone, may be used to perform the necessary steps, or part of said steps, for determining the type of the detected capsule, based upon information provided by the sensing arrangement and transmitted by the controller on the communication interface.

In a third step 330, if the first element is in the first state, the controller send to the module a request to perform a specific action, for example to activate a specific module and/or software such as a capsules order processing module, as illustrated on figure 3. More specifically, the request may comprise information related to an order of capsules, for example a request to activate a specific module and/or software such as a capsules order processing module and/or a request to prepare and/or to send a new order with. Then, the module may trigger the execution of an ordering processing module or display a reminder that the user may place a new order of capsules. Optionnally, during the third step, information related to the detected capsule, like its type, provided by the sensing arrangement, is transmitted by the controller on the communication interface. Optionally, the feedback means may display said information or used said information to display information related to the detected capsule by processing information received on the communication interface and/or retrieving locally or remotely data related to the received information. An example of information that can be displayer are shown on figure 3.

In an embodiment, the sensing arrangement is adapted to detect the presence of capsules in a detection area and to count the number of capsules in the detection area. For instance, the sensing arrangement may be adapted to count the number of capsules in the detection area by receiving or reading information from the capsules present in the detection area, for example by receiving signals from RFID tags embedded in each capsule and identifying each one separately, and/or by measuring at least one of the following characteristic of the capsules positioned in the detection area: geometry or optical pattern recognition, weight, identifying information for identifying each capsules separately. The sensing arrangement being further adapted to count the number of capsules in the detection area; the information sent by the controller to the module through the first interface, may comprise the number of capsules in the detection area. The module receiving said count information may be configured to automatically prepare and/or send a re-order using said count information. More particularly, it allows the module to prepare automatically an order, when the user has switched the first element into the first state and when the stock of capsules has reached a given threshold. The ordering processing module may prepare and/or place automatically a saved order when the number of capsules is below a given threshold.

Referring to Figure 6a and 6b, there is shown therein an embodiment of the capsule storage and a beverage preparation machine 200. The capsule storage further comprises a second connector 112 adapted to be coupled into a third external connector 210 of a beverage preparation machine 200. The second connector 200 may be arranged to receive energy supplied by the third external connector 210, and to distribute through power circuit said energy to components of the device. The second connector 112 and the third external connector 210 may be of a USB type for example. In the embodiment of figure 7, the capsule storage may further comprise a second communication interface adapted for exchanging data with the beverage preparation machine. In particular, the controller is further configured to send, through the second communication interface, the information related to the detected capsule, to the beverage preparation machine. The controller can also be further configured to send to the module, through the first communication interface, the information received from the beverage preparation machine on the second communication interface. The information sent by the controller to the module, may comprise data received from beverage preparation machine. The information sent by the controller may also comprise data received from beverage preparation machine related to capsules consumption of said beverage preparation machine. For example, the order processing module may follow the stock of capsules using the number and/or type of capsules used by the beverage preparation machine to actually prepare beverage, and prepare order accordingly. As illustrated on Fig. 7a and 7b, the beverage preparation machine comprises a communication interface adapted for exchanging data with the capsule storage, and a connector adapted to be coupled into the corresponding connector of the capsule storage for supplying energy to said storage. The communication interface of the beverage preparation machine may share the same connector used to supply energy.

## Claims

1. A capsule storage device (100) comprising a container (102) for storing capsules (5) containing an ingredient for preparing a beverage using a beverage preparation machine (200), **characterised in that** the capsule storage device (100) further comprises:
• a first interface (104, 404) for communicating with a module (108);
• a user-interface having a first element (112) switchable into at least a first state;
• a controler configured to send information to the module (108), through the first interface (104, 404), when the first element (112) is switched into the first state,
wherein the information sent by the controller through the first interface (104, 404), comprises a request to perform a specific action related to an order of capsules.

2. The capsule storage device (100) according to claim 1, further comprising a sensing arrangement (106) adapted to detect the presence of a capsule (5) in a detection area and to obtain information related to said capsule (5); the information sent by the controller through the first interface (104, 404), comprising said capsule related information.

3. The capsule storage device (100) according to claim 2, wherein the sensing arrangement (106) is adapted to obtain information related to the capsule by receiving or reading information from the capsule (5), and/or by measuring at least one of the following characteristic of the capsule (5):
spectral property, colour, electrical property, resistivity, capacitance,
electromagnetic property, magnetic induced field, mechanical property, geometry, weight, identifying information, code bar, emitted or reflected signal.

4. The capsule storage device (100) according to claims 2 or 3, wherein the sensing arrangement (106) is further adapted to identify a type for the capsule (5), and send, through the first interface (104, 404), data related to the type for the capsule (5), the information sent by the controller through the first interface (104, 404), comprising the type of the capsule (5) in the detection area.

5. The capsule storage device (100) according to any of the preceding claims, wherein the sensing arrangement (106) is further adapted to count the number of capsules (5) in the detection area; the information sent by the controller to the module (108) through the first interface (104, 404), comprising the number of capsules (5) in the detection area.

6. The capsule storage device (100) according to any of the preceding claims, further comprising a docking station (105) provided with a support for holding the module (108).

7. The capsule storage device (100) according to claim 6, wherein the docking station (105) is provided with connectors for supplying energy to the module (108) held by the support.

8. The capsule storage device (100) according to any of the preceding claims, further comprising a second connector (112) adapted to be coupled into a third external connector (210) of a beverage preparation machine (200), the second connector (112) being arranged to receive energy supplied by the third external connector (210), and to distribute through a power circuit said energy to components of the capsule storage device (100).

9. The capsule storage device (100) according to any of the preceding claims, further comprising a communication interface adapted for exchanging data with a beverage preparation machine (200), the information sent by the controller through the first interface, comprising data received from beverage preparation machine (200).

10. The capsule storage device (100) according to claim 9, wherein the information sent by the controller through the first interface (104, 404), comprising data received from beverage preparation machine (200) related to capsules consumption of said beverage preparation machine (200).

11. A system comprising a capsule storage device (100) according to any of the claim 2 to 10 and at least one capsule (5) wherein the capsule (5) is arranged to communicate information to the sensing arrangement (106) to detect its presence in the detection area, and/or least one of the following measureable characteristics of the capsule (5): spectral property, colour, electrical property, resistivity, capacitance, electromagnetic property, magnetic induced field, mechanical property, geometry, weight, identifying information, code bar, emitted or reflected signal; said information and/or measurable characteristic(s) being further selected to provide or refer to information related to the detected capsule (5) to the controller through the first interface (104, 404).

12. Use of a capsule (5) with a capsule storage device (100) according to any of the claims 2 to 10, said capsule (5) being arranged to communicate information to the sensing arrangement (106) to detect its presence in the detection area, and/or least one of the following measureable characteristics of the capsule (5): spectral property, colour, electrical property, resistivity, capacitance, electromagnetic property, magnetic induced field, mechanical property, geometry, weight, identifying information, code bar, emitted or reflected signal; said information and/or measurable characteristic(s) being further selected to provide or refer to information related to the detected capsule (5) to the controller through the first interface (104, 404).

13. A beverage preparation system comprising the capsule storage device (100) according to any one of claims 1 to 10 and a beverage preparation machine (200), said machine (200) comprising:
• a communication interface adapted for exchanging data with the capsule storage device (100); and/or,
• a connector adapted to be coupled into an external connector of the capsule storage device (100) for supplying energy to said capsule storage device (100).

14. A module (108) comprising:
• a second interface for communicating with a capsule storage device (100) according to any one of claims 1 to 10;
• a controler configured to receive information from the capsule storage device (100) through the second interface;
• a processing module configured upon reception of the information to process said information to perform a specific action, whereby the specific action comprises launching a capsule ordering processing module for displaying received information and/or reminding a user to perform an order of capsules, and/or preparing an order of capsules based upon received information, and/or automatically send an order of capsules.

15. The module (108) according to the directly preceding claim being selected from a list consisting of: a smartphone; tablet; computer.

## Patentansprüche

1. Kapselaufbewahrungsvorrichtung (100), umfassend einen Behälter (102) zur Aufbewahrung von Kapseln (5), die einen Inhaltsstoff zum Zubereiten eines Getränks mittels einer Getränkezubereitungsmaschine (200) **enthalten, dadurch gekennzeichnet, dass** die Kapselaufbewahrungsvorrichtung (100) ferner umfasst:
• eine erste Schnittstelle (104, 404) zum Kommunizieren mit einem Modul (108);
• eine Benutzerschnittstelle mit einem ersten Element (112), das in wenigstens einen ersten Zustand umschaltbar ist;
• eine Steuereinrichtung, die zum Senden von Informationen an das Modul (108), durch die erste Schnittstelle (104, 404) konfiguriert ist, wenn das erste Element (112) in den ersten Zustand umgeschaltet wird,
wobei die Informationen, die von der Steuereinrichtung durch die erste Schnittstelle (104, 404) gesendet werden, eine Anforderung zum Durchführen einer spezifischen Handlung im Zusammenhang mit einer Bestellung von Kapseln umfassen.

2. Kapselaufbewahrungsvorrichtung (100) nach Anspruch 1, ferner umfassend eine Sensoranordnung (106), die dazu angepasst ist, das Vorhandensein einer Kapsel (5) in einem Erfassungsbereich zu erfassen und Informationen im Zusammenhang mit der Kapsel (5) zu erhalten; wobei die Informationen, die von der Steuereinrichtung durch die erste Schnittstelle (104, 404) gesendet werden, die Informationen im Zusammenhang mit der Kapsel umfassen.

3. Kapselaufbewahrungsvorrichtung (100) nach Anspruch 2, wobei die Sensoranordnung (106) dazu angepasst ist, durch Empfangen oder Lesen von Informationen von der Kapsel (5) und/oder durch Messen von mindestens einer der folgenden Eigenschaften der Kapsel (5) Informationen in Bezug auf die Kapsel zu erhalten: Spektralverhalten, Farbe, elektrisches Verhalten, spezifischer Widerstand, Kapazität, elektromagnetisches Verhalten, induziertes Magnetfeld, mechanisches Verhalten, Geometrie, Gewicht, Kennung, Codestrich, gesendetes oder reflektiertes Signal.

4. Kapselaufbewahrungsvorrichtung (100) nach den Ansprüchen 2 oder 3, wobei die Sensoranordnung (106) ferner dazu angepasst ist, einen Typ für die Kapsel (5) zu identifizieren und über die erste Schnittstelle (104, 404) Daten in Bezug auf den Typ für die Kapsel (5) zu senden, wobei die Informationen, die von der Steuereinrichtung durch die erste Schnittstelle (104, 404) gesendet werden, den Typ der Kapsel (5) im Erfassungsbereich umfassen.

5. Kapselaufbewahrungsvorrichtung (100) nach einem der vorangehenden Ansprüche, wobei die Sensoranordnung (106) ferner dazu angepasst ist, die Anzahl von Kapseln (5) im Erfassungsbereich zu zählen; wobei die Informationen, die von der Steuereinrichtung durch erste Schnittstelle (104, 404) an das Modul (108) gesendet werden, die Anzahl von Kapseln (5) im Erfassungsbereich umfassen.

6. Kapselaufbewahrungsvorrichtung (100) nach einem der vorangehenden Ansprüche, ferner umfassend eine Andockstation (105), die mit einem Träger zum Halten des Moduls (108) versehen ist.

7. Kapselaufbewahrungsvorrichtung (100) nach Anspruch 6, wobei die Andockstation (105) mit Steckverbindern versehen ist, um das Modul (108), das von dem Träger gehalten wird, mit Energie zu versorgen.

8. Kapselaufbewahrungsvorrichtung (100) nach einem der vorangehenden Ansprüche, ferner umfassend einen zweiten Steckverbinder (112), der dazu angepasst ist, in einen dritten externen Steckverbinder (210) einer Getränkezubereitungsmaschine (200) gekoppelt zu werden, wobei der zweite Steckverbinder (112) dazu angeordnet ist, durch den dritten externen Steckverbinder (210) bereitgestellte Energie aufzunehmen und die Energie über einen Stromkreis Komponenten der Kapselaufbewahrungsvorrichtung (100) zuzuführen.

9. Kapselaufbewahrungsvorrichtung (100) nach einem der vorangehenden Ansprüche, ferner umfassend eine Kommunikationsschnittstelle, die zum Austauschen von Daten mit einer Getränkezubereitungsmaschine (200) angepasst ist, wobei die Informationen, die von der Steuereinrichtung durch erste Schnittstelle gesendet werden, von der Getränkezubereitungsmaschine (200) empfangene Daten umfassen.

10. Kapselaufbewahrungsvorrichtung (100) nach Anspruch 9, wobei die Informationen, die von der Steuereinrichtung durch die erste Schnittstelle (104, 404) gesendet werden, von der Getränkezubereitungsmaschine (200) empfangene Daten im Zusammenhang mit dem Kapselverbrauch der Getränkezubereitungsmaschine (200) umfassen.

11. System, das eine Kapselaufbewahrungsvorrichtung (100) nach einem der Ansprüche 2 bis 10 sowie mindestens eine Kapsel (5) umfasst, wobei die Kapsel (5) dazu angeordnet ist, Informationen an die Sensoranordnung (106) zu übermitteln, um ihr Vorhandensein im Erfassungsbereich und/oder mindestens eine der folgenden messbaren Eigenschaften der Kapsel (5) zu erfassen: Spektralverhalten, Farbe, elektrisches Verhalten, spezifischer Widerstand, Kapazität, elektromagnetisches Verhalten, induziertes Magnetfeld, mechanisches Verhalten, Geometrie, Gewicht, Kennung, Codestrich, gesendetes oder reflektiertes Signal; wobei die Informationen und/oder messbare(n) Eigenschaft(en) weiterhin dazu ausgewählt sind, Informationen in Bezug auf die erfasste Kapsel (5) über die erste Schnittstelle (104, 404) an die Steuereinrichtung bereitzustellen oder darauf Bezug zu nehmen.

12. Verwendung einer Kapsel (5) mit einer Kapselaufbewahrungsvorrichtung (100) nach einem der Ansprüche 2 bis 10, wobei die Kapsel (5) dazu angeordnet ist, Informationen an die Sensoranordnung (106) zu übermitteln, um ihr Vorhandensein im Erfassungsbereich und/oder mindestens eine der folgenden messbaren Eigenschaften der Kapsel (5) zu erfassen: Spektralverhalten, Farbe, elektrisches Verhalten, spezifischer Widerstand, Kapazität, elektromagnetisches Verhalten, induziertes Magnetfeld, mechanisches Verhalten, Geometrie, Gewicht, Kennung, Codestrich, gesendetes oder reflektiertes Signal; wobei die Informationen und/oder messbare(n) Eigenschaft(en) weiterhin dazu ausgewählt sind, Informationen in Bezug auf die erfasste Kapsel (5) über die erste Schnittstelle (104, 404) an die Steuereinrichtung bereitzustellen oder darauf Bezug zu nehmen.

13. Getränkezubereitungssystem, das die Kapselaufbewahrungsvorrichtung (100) nach einem der Ansprüche 1 bis 10 und eine Getränkezubereitungsmaschine (200) umfasst, wobei die Maschine (200) Folgendes umfasst:
• eine Kommunikationsschnittstelle, die zum Austauschen von Daten mit der Kapselaufbewahrungsvorrichtung (100) angepasst ist; und/oder,
• einen Steckverbinder, der dazu angepasst ist, in einen externen Steckverbinder der Kapselaufbewahrungsvorrichtung (100) gekoppelt zu werden, um die Kapselaufbewahrungsvorrichtung (100) mit Energie zu versorgen.

14. Modul (108), umfassend:
• eine zweite Schnittstelle zum Kommunizieren mit einer Kapselaufbewahrungsvorrichtung (100) nach einem der Ansprüche 1 bis 10;
• eine Steuereinrichtung, die dazu konfiguriert ist, Informationen von der Kapselaufbewahrungsvorrichtung (100) durch die zweite Schnittstelle zu empfangen;
• ein Verarbeitungsmodul, das dazu konfiguriert ist, bei Empfang der Informationen die Informationen zu verarbeiten, um eine spezifische Handlung durchzuführen, wobei die spezifische Handlung das Starten eines Kapselbestellverarbeitungsmoduls zum Anzeigen empfangener Informationen und/oder Erinnern eines Benutzers, eine Bestellung von Kapseln auszuführen, und/oder zum Vorbereiten einer Bestellung von Kapseln auf Grundlage empfangener Informationen und/oder automatischen Senden einer Bestellung von Kapseln umfasst.

15. Modul (108) nach dem unmittelbar vorangehenden Anspruch, das ausgewählt ist aus einer Liste bestehend aus: einem Smartphone; Tablet; Computer.

## Revendications

1. Dispositif de stockage de capsules (100) comprenant un récipient (102) pour le stockage de capsules (5) contenant un ingrédient pour préparer une boisson à l'aide d'une machine de préparation de boisson (200), **caractérisé en ce que** le dispositif de stockage de capsules (100) comprend en outre :
• une première interface (104, 404) pour communiquer avec un module (108) ;
• une interface utilisateur ayant un premier élément (112) commutable vers au moins un premier état ;
• un contrôleur configuré pour envoyer des informations vers le module (108), par le biais de la première interface (104, 404), lorsque le premier élément (112) est commuté vers le premier état,
dans lequel les informations envoyées par le contrôleur par le biais de la première interface (104, 404) comprennent une requête visant à réaliser une action spécifique associée à une commande de capsules.

2. Dispositif de stockage de capsule (100) selon la revendication 1, comprenant en outre un agencement de détection (106) conçu pour détecter la présence d'une capsule (5) dans une zone de détection et pour obtenir des informations associées à ladite capsule (5) ; les informations envoyées par le contrôleur par le biais de la première interface (104, 404) comprenant lesdites informations associées à la capsule.

3. Dispositif de stockage de capsules (100) selon la revendication 2, dans lequel l'agencement de détection (106) est conçu pour obtenir des informations associées à la capsule par réception ou lecture d'informations depuis la capsule (5) et/ou par mesure d'au moins une des caractéristiques suivantes de la capsule (5) : propriété spectrale, couleur, propriété électrique, résistivité, capacité, propriété électromagnétique, champ magnétique induit, propriété mécanique, géométrie, poids, informations d'identification, code à barres, signal émis ou réfléchi.

4. Dispositif de stockage de capsules (100) selon les revendications 2 ou 3, dans lequel l'agencement de détection (106) est en outre conçu pour identifier un type pour la capsule (5) et envoyer, par le biais de la première interface (104, 404), des données associées au type pour la capsule (5), les informations envoyées par le contrôleur par le biais de la première interface (104, 404) comprenant le type de la capsule (5) dans la zone de détection.

5. Dispositif de stockage de capsules (100) selon l'une quelconque des revendications précédentes, dans lequel l'agencement de détection (106) est en outre conçu pour compter le nombre de capsules (5) dans la zone de détection ; les informations envoyées par le contrôleur au module (108) par le biais de la première interface (104, 404) comprenant le nombre de capsules (5) dans la zone de détection.

6. Dispositif de stockage de capsules (100) selon l'une quelconque des revendications précédentes, comprenant en outre une station d'accueil (105) pourvue d'un support pour tenir le module (108).

7. Dispositif de stockage de capsules (100) selon la revendication 6, dans lequel la station d'accueil (105) est pourvue de connecteurs pour alimenter en énergie le module (108) tenu par le support.

8. Dispositif de stockage de capsules (100) selon l'une quelconque des revendications précédentes, comprenant en outre un deuxième connecteur (112) conçu pour être couplé à un troisième connecteur externe (210) d'une machine de préparation de boisson (200), le deuxième connecteur (112) étant disposé pour recevoir l'énergie fournie par le troisième connecteur externe (210) et pour distribuer, par le biais d'un circuit de puissance, ladite énergie vers les composants du dispositif de stockage de capsules (100).

9. Dispositif de stockage de capsules (100) selon l'une quelconque des revendications précédentes, comprenant en outre une interface de communication conçue pour échanger des données avec une machine de préparation de boisson (200), les informations envoyées par le contrôleur par le biais de la première interface comprenant des données reçues depuis la machine de préparation de boisson (200).

10. Dispositif de stockage de capsules (100) selon la revendication 9, dans lequel les informations envoyées par le contrôleur par le biais de la première interface (104, 404) comprennent des données, reçues depuis la machine de préparation de boisson (200), associées à la consommation de capsules de ladite machine de préparation de boisson (200).

11. Système comprenant un dispositif de stockage de capsule (100) selon l'une quelconque des revendications 2 à 10 et au moins une capsule (5), dans lequel la capsule (5) est disposée pour communiquer des informations à l'agencement de détection (106) afin qu'il détecte sa présence dans la zone de détection et/ou au moins une des caractéristiques mesurables de la capsule (5) : propriété spectrale, couleur, propriété électrique, résistivité, capacité, propriété électromagnétique, champ magnétique induit, propriété mécanique, géométrie, poids, informations d'identification, code à barres signal émis ou réfléchi ; lesdites informations et/ou la ou lesdites caractéristiques mesurables étant en outre choisies pour fournir ou faire référence à des informations associées à la capsule détectée (5) au contrôleur par le biais de la première interface (104, 404).

12. Utilisation d'une capsule (5) avec un dispositif de stockage de capsules (100) selon l'une quelconque des revendications 2 à 10, ladite capsule (5) étant disposée pour communiquer des informations à l'agencement de détection (106) afin qu'il détecte sa présence dans la zone de détection et/ou au moins une des caractéristiques mesurables suivantes de la capsule (5) : propriété spectrale, couleur, propriété électrique, résistivité, capacité, propriété électromagnétique, champ magnétique induit, propriété mécanique, géométrie, poids, informations d'identification, code à barres, signal émis ou réfléchi ; lesdites informations et/ou la ou lesdites caractéristiques mesurables étant en outre choisies pour fournir ou faire référence à des informations associées à la capsule détectée (5) au contrôleur par le biais de la première interface (104, 404).

13. Système de préparation de boisson comprenant le dispositif de stockage de capsules (100) selon l'une quelconque des revendications 1 à 10 et une machine de préparation de boisson (200), ladite machine (200) comprenant :
• une interface de communication conçue pour échanger des données avec le dispositif de stockage de capsules (100) ; et/ou
• un connecteur conçu pour être couplé dans un connecteur externe du dispositif de stockage de capsules (100) afin d'alimenter en énergie ledit dispositif de stockage de capsules (100).

14. Module (108) comprenant :
• une seconde interface pour communiquer avec un dispositif de stockage de capsules (100) selon l'une quelconque des revendications 1 à 10 ;
• un contrôleur configuré pour recevoir des informations du dispositif de stockage de capsules (100) par le biais de la seconde interface ;
• un module de traitement configuré, lors de la réception des informations, pour traiter lesdites informations afin de réaliser une action spécifique, moyennant quoi l'action spécifique comprend le lancement d'un module de traitement de commande de capsule destiné à afficher des informations reçues et/ou le fait de rappeler à un utilisateur de réaliser une commande de capsules et/ou la préparation d'une commande de capsules sur la base des informations reçues, et/ou l'envoi automatique d'une commande de capsules.

15. Module (108) selon la revendication directement précédente, étant choisi parmi une liste constituée de : un téléphone intelligent ; une tablette ; un ordinateur.
